# EUROPÄISCHE PATENTANMELDUNG

(11) **EP 0 863 298 A2**
(43) Veröffentlichungstag der Anmeldung: **09.09.1998**
(21) Anmeldenummer: 98109809.8
(22) Anmeldetag: 27.12.1994
(51) Int. Cl.: F01N 7/14

(54) **Doppelwandige Abgasleitung**

(30) Priorität: 31.12.1993 DE 4345052
(62) Teilanmeldung aus: 94120706.0
(71) Anmelder: J. Eberspächer GmbH & Co., 73730 Esslingen (DE)
(72) Erfinder: Schaefer, Horst, 66539 Neunkirchen (DE)
(74) Vertreter: Klunker . Schmitt-Nilson . Hirsch

(57) **Zusammenfassung**

Verfahren zum Herstellen einer eine Biegung aufweisenden, doppelwandigen Abgasleitung (2) mit einem Außenrohr (4) und einem Innenrohr (6), das in Längsrichtung gewellt ist,
dadurch gekennzeichnet,
daß das Außenrohr (4) allein gebogen und das Innenrohr (6) in das gebogene Außenrohr (4) eingebracht wird.

## Beschreibung

Die Erfindung bezieht sich auf eine doppelwandige Abgasleitung mit einem Außenrohr und einem Innenrohr.

Doppelwandige Abgasleitungen sind aus dem Kraftfahrzeugbau bekannt. Speziell in Automobilen mit Abgaskatalysatoren werden Doppelwandige Abgasleitungen mindestens in dem motornahen Teil des Abgassystems besonders häufig eingesetzt. Doppelwandige Abgasleitungen sind auch unter dem Begriff luftspaltisolierte Rohre bekannt. Der Luftspalt zwischen dem Außenrohr und dem Innenrohr erfüllt sowohl schallisolierende als auch wärmeisolierende Aufgaben. Besonders in der Kaltstartphase von Automobilen mit Katalysator kommt es darauf an, möglichst heiße Abgase dem Katalysator zuzuführen, um ein rasches Aufheizen auf Betriebstemperatur des Katalysators zu gewährleisten. Andererseits müssen an der Wagenunterseite selbst bei betriebsheißem Fahrzeug die einzelnen Teile des Abgassystems ausreichend kühl bleiben, um bei einem abgestellten Fahrzeug Entzünden z.B. von trockenem Gras oder Papier unter dem Fahrzeug zu verhindern.

Erfindungsgemäß ist die doppelwandige Abgasleitung dadurch gekennzeichnet, daß das Innenrohr mit gewelltem Querschnitt vorgesehen ist und daß das Innenrohr mindestens auf einem Teil seiner Länge an dem Außenrohr anliegt.

Gegenüber den üblichen Innenrohren haben Innenrohre mit gewelltem Querschnitt den Vorteil, daß sie sich in dem Außenrohr selbst positionieren. Insbesondere müssen keine zusätzlichen Distanzhalteelemente vorgesehen sein, wie sie bisher speziell bei längeren Abgasleitungen oder bei besonders gekrümmten Abgasleitungen nötig waren. Vorzugsweise ist das Innenrohr so dimensioniert, daß es im kalten Zustand der Abgasleitung mit seinen Wellbergen innen in dem Außenrohr anliegt. Dies gilt mindestens für einige längs der Abgasleitung beabstandete stellen. Dies gilt ferner mindestens für die Bereiche von Biegungen der Abgasleitung und dort ganz besonders für die Biegungsaußenseite. Andererseits ist es nicht zwingend erforderlich, daß das Innenrohr über den Umfang mit allen Wellbergen mit dem Außenrohr in Kontakt ist, bereits eine Anlage mit einzelnen, umfangsmäßig verteilten Wellbergen führt zu einer ausreichenden Zentrierung des Innenrohrs. Überhaupt ist, wiewohl bevorzugt, ein Anliegen zwischen Innenrohr und Außenrohr nicht unbedingt nötig.

Das Innenrohr muß nicht unbedingt gleichmäßig und rund gewellt sein, die erfindungsgemäßen Vorteile können auch mit mehreckigen oder unregelmäßigen Prägungen erhalten werden. Die Wellprägung muß nicht durchgehend über die ganze Länge des Innenrohrs ausgeführt sein. Als Extremfall kann man sich die Wellprägung auch in einzelne über die Länge verteilte Höcker aufgelöst vorstellen. Parallel zur Längsrichtung der Abgasleitung verlaufende Welltäler und Wellberge setzen dem Abgas den geringsten Strömungswiderstand entgegen und sind am einfachsten herzustellen. Soll, z.B. vor einem Katalysator, dem Abgasstrom eine Drall-Komponente mitgegeben werden, so kann das einfach durch Schrägstellen der Welltäler bzw. der Wellberge gegen die Längsrichtung der Abgasleitung erfolgen.

Besonders vorteilhaft ist eine Abgasleitung mit einem Innenrohr mit gewelltem Querschnitt, wenn diese eine Biegung aufweist, und wenn das Innenrohr mindestens im Bereich dieser Biegung an dem Außenrohr anliegt. Wie weiter hinten noch beschrieben werden wird, lassen sich derartige gebogene Abgasleitungen ganz besonders einfach herstellen, was zu deutlichen Einsparungen besonders bei den Personalkosten führt.

Vorzugsweise ist das Innenrohr an einem Ende der Abgasleitung an dem Außenrohr befestigt. Schweißen und ganz besonders Punktschweißen sind schnell herzustellende, günstige und haltbare Verbindungen, deren Anwendung hierfür bevorzugt ist. Das Innenrohr ist damit in seiner Längsrichtung relativ zu dem Außenrohr zumindest einseitig festgelegt.

Es ist ganz besonders bevorzugt, wenn das Innenrohr an einem Ende oder an beiden Enden der Abgasleitung mit Schiebesitz in dem Außenrohr angeordnet ist. Außenrohr und Innenrohr einer Abgasleitung erreichen im Einsatz unterschiedlich hohe Temperaturniveaus, was zu unterschiedlichen Wärmedehnungen führt. Dieser Unterschied kann bei Abgasleitungen mit etwa einem Meter Länge bereits einige Millimeter betragen und noch größer werden, wenn für das Innenrohr und für das Außenrohr Materialien mit unterschiedlichen Wärmeausdehnungskoeffizienten verwendet werden. Mit einem Schiebesitz werden Längenunterschiede zwischen dem Außenrohr und dem Innenrohr kompensiert, wenn sich beide mindestens über einen Teilbereich ihrer Länge relativ zueinander in Längsrichtung bewegen können. Es ist besonders günstig, wenn an den Enden, sowohl bei einem Schiebesitz als auch bei einem Ende, an dem Innenrohr und Außenrohr miteinander verbunden sind, das Innenrohr nicht gewellt ist. So wird eine unmittelbare Zuleitung großer Abgasmengen in den Raum zwischen Außenrohr und Innenrohr vermieden.

Vorzugsweise besitzt das Innenrohr eine geringere Wandstärke als das Außenrohr. Ein gewelltes Innenrohr kann eine ganz besonders geringe Wandstärke besitzen, da die Wellung in der Längsrichtung eine deutliche Versteifung des Rohres bewirkt.

Das Innenrohr kann vorzugsweise auch aus einem wärmefesteren Material als das Außenrohr bestehen. Bei der vorgesehenen Verwendung wird die Maximaltemperatur an dem Innenrohr erreicht. Selbst wenn das Außenrohr bereichsweise mit dem Innenrohr in Kontakt steht, werden sich an diesem keine derart hohen Temperaturen einstellen. Ein Grund dafür ist in der besseren Kühlung des Außenrohres und den erheblich geringeren Wärmeübergang an einer Berührunsstelle zwischen zwei Metallteilen im Verhältnis zu einem Wärmeübergang im Vollmaterial zu suchen.

Die Erfindung bezieht sich ferner auf ein Verfahren zum Herstellen einer gebogenen, doppelwandigen Abgasleitung, wie sie im vorhergehenden beschrieben wurde, dadurch gekennzeichnet, daß das Innenrohr in das Außenrohr geschoben wird; und daß zum Biegen der Abgasleitung ein Dorn mit einem der Wellung des Innenrohrs angepaßten Kopf in die Abgasleitung eingeführt wird.

Bisher forderte speziell das Biegen doppelwandiger Abgasleitungen ein sehr aufwendiges Verfahren. Zum Zwecke des Biegens mußte der Spalt zwischen dem Innenrohr und dem Außenrohr mit einem Füllmaterial, z.B. Sand, gefüllt werden, um die Position des Innenrohres beim Biegen festzulegen. Das Befüllen und das Entleeren des Zwischenraumes mit dem Füllmaterial war äußerst zeit- und damit kostenaufwendig. Ganz besonders bei Abgasleitungen mit Schiebesitzen mußte beim Entleeren sehr sorgfältig vorgegangen werden, um ein Verschmutzen und damit ein Verklemmen des Schiebesitzes zu verhindern. Mit dem erfindungsgemäßen Verfahren zur Herstellung ist ein derartiges Befüllen mit einem Füllmaterial vor dem Biegen nicht mehr nötig, da das Innenrohr mit seiner Wellung eine innere Aussteifung des Außenrohrs bildet. Mindestens ein Dorn mit einem kugeligen Kopf kann zum Biegen in den vorgesehenen Biegebereich eingebracht werden und verhindert beim Biegen ein Zusammendrücken von Innenrohr und Außenrohr. Der kugelige Kopf des Dorns ist in seiner äußeren Form an die Wellung des Innenrohrs angepaßt, somit bleibt die Wellung des Innenrohrs im Bereich der Biegung erhalten. Vorzugsweise wird nur ein Dorn als Wellungsabstützung in den Biegebereich eingebracht, und die Biegekräfte werden über ein Angreifen von außen auf die Abgasleitung übertragen. Nach dem Biegen muß nur noch der Dorn entfernt werden.

Die erfindungsgemäße Abgasleitung besitzt neben den Vorteilen bei der Herstellung auch Vorteile, die sich im Betrieb positiv bemerkbar machen. Der Wärmeverlust während der Kaltstartphase ist besonders gering, denn obwohl durch die Wellung des Innenrohrs die Fläche des Innenrohrs vergrößert wird, wird das von dem Abgas zu erwärmende Volumen des Innenrohrs eher geringer, da das Innenrohr mit einer deutlich geringeren Wandstärke hergestellt werden kann. Im Lastbetrieb ergeben sich durch die zumindest streckenweise Anlage von Bereichen des Innenrohrs an das Außenrohr etwas größere Wärmeverluste des Abgases an die Umgebung als bei üblichen Abgasleitungen, was in diesem Betriebszustand sogar wünschenswert ist.

Die Erfindung und Weiterbildungen der Erfindung werden nachfolgend anhand eines teilweise schematisiert dargestellten Ausführungsbeispiels noch näher erläutert. Es zeigt:
- **Fig. 1**: Draufsicht auf einen Horizontalschnitt durch eine Abgasleitung;
- **Fig. 2**: Querschnitt durch eine erfindungsgemäße Abgasleitung mit Außenrohr und gewelltem Innenrohr entlang der Linie 1-1 von Fig. 1.

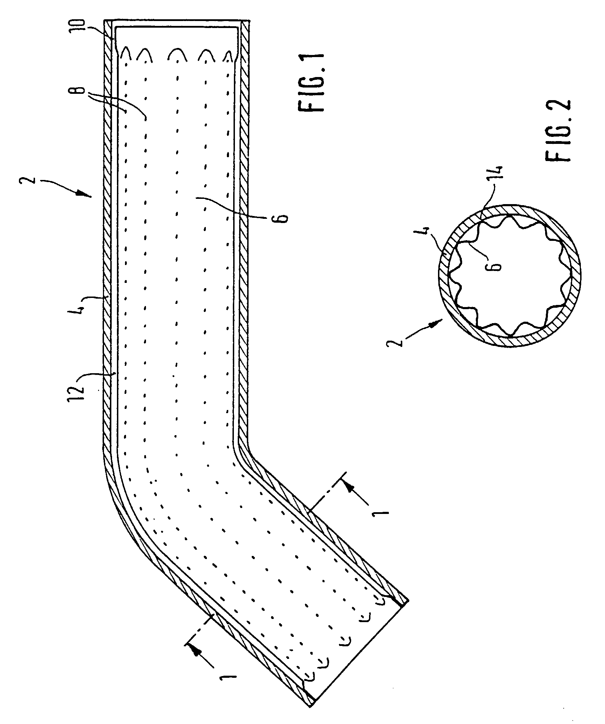

**Fig. 1** stellt eine doppelwandige Abgasleitung 2 dar, wie sie beispielsweise in einem Kraftfahrzeug zwischen Motor und Katalysator Verwendung finden kann. Die Abgasleitung 2 besteht aus einem Außenrohr 4, dessen geschnitten dargestellter Bereich in **Fig. 1** schraffiert ist, und einem gewellten Innenrohr 6. Die Heilung des Innenrohrs 6 wird durch punktierte Linien 8 dargestellt, die die Wellenberge 14 des geschnittenen Innenrohrs 6 markieren.

Im kalten Zustand liegt das Innenrohr 6 entlang der Wellberge 14 an der Innenseite des Außenrohrs 4 an. Die Anlagekräfte sind so gering, daß mindestens in den nichtgebogenen Leitungsbereichen in Längsrichtung eine Relativbewegung zwischen dem Außenrohr 4 und dem Innenrohr 6 möglich ist. Das Innenrohr 6 kann auch so dimensioniert sein, daß es in den nicht gebogenen Leitungsbereichen nicht an dem Außenrohr 4 anliegt und in einem Biegungsbereich eine Anlage besteht, die z.B. beim Biegen durch die Querschnittsverformung von Außenrohr 4 und Innenrohr 6 zustandekommt.

Im linken Endbereich der Abgasleitung 2 ist eine feste Verbindung zwischen dem Innenrohr 6 und dem Außenrohr 4 dargestellt. Das Innenrohr 6 ist aufgeweitet, liegt ungewellt auf eine gewisse Länge an dem Außenrohr 4 an und ist mit Punktschweißungen an diesem befestigt. Die halbkreisförmigen Linien in der **Fig. 1** nahe den gepunkteten Linien zeigen das Auslaufen der Wellung des Innenrohrs 6 zu dem ungewellten Endbereich an.

Demgegenüber zeigt der rechte Endbereich der Abgasleitung einen Schiebesitz des Innenrohrs 6 in dem Außenrohr 4. Das Innenrohr 6 ist hier ebenfalls ungewellt und gerade so groß, daß es mit dem Außenrohr 4 in Anlage kommt, jedoch gegen dieses in Längsrichtung leicht verschoben werden kann. Längenunterschiede des Außenrohrs 4 und des Innenrohrs 6, wie sie beispielsweise bei thermischen Längenänderungen während des Betriebes häufig auftreten, können in einem solchen Schiebesitz leicht kompensiert werden, so daß Spannungen, welche das Bauteil zerstören könnten, nicht auftreten können.

Der Luftspalt 12 zwischen dem Außenrohr 4 und dem Innenrohr 6 ist bei einer derartigen Ausbildung der Endbereiche von dem abgasführenden Bereich so abgeschlossen, daß nur in geringem Maße Abgase in den Luftspalt 12 gelangen können.

Wenn auch in der **Fig. 1** die Wandstärke des Außenrohrs 4 zum Zweck einer deutlicheren Darstellung übertrieben dick dargestellt ist, so trifft es dennoch zu, daß die Wandstärke des Innenrohrs 6 wesentlich dünner gewählt werden kann als die des Außenrohrs 4. Durch die in Längsrichtung verlaufenden Berge und Täler der Wellung erfährt das Innenrohr 6 eine deutliche Stabilitätsverbesserung, demzufolge können für ein gewelltes Innenrohr 6 noch wesentlich geringere Wandstärken vorgesehen werden, als das bei üblichen doppelwandigen Abgasleitungen möglich war. Die minimale Wandstärke wird nur durch die Abrasion des Abgases bzw., falls eine Biegung vorgesehen ist, durch die Zugspannung im Bereich der Biegung bestimmt. Während für das Außenrohr 4 häufig ein übliches Stahlblech ausreichend ist, wird üblicherweise für das Innenrohr ein korrosionsbeständigeres und wärmebeständigeres Material verwendet. Durch die geringere Wandstärke ist eine Material- und Gewichtsersparnis möglich.

In **Fig. 2** ist der Querschnitt durch die Abgasleitung 2 entlang der Linie 1-1 dargestellt. Man erkennt das Außenrohr 4 und das gewellte Innenrohr 6 das mit den Wellbergen 14 die Innenseite des Außenrohr 4 berührt. Der Außenumfang des Innenrohrs 6 ist so bemessen, daß mindestens in den Bereichen, die nicht gebogen wurden, eine Relativbewegung zwischen Innenrohr 6 und Außenrohr 4 leicht möglich ist.

Verwendet man statt eines in seinem Querschnitt gewellten Innenrohrs 6 ein längsgewelltes Innenrohr, dessen Berge und Täler radial umlaufen und in Längsrichtung aufeinanderfolgen, kann man zu einem deutlich einfacheren Herstellungsverfahren übergehen. Außenrohr 4 und Innenrohr 6 müssen vor dem Biegen nicht miteinander vereinigt werden, stattdessen kann das Außenrohr 4 alleine gebogen werden. Das längsgewellte Innenrohr 6 ist von einer solchen Flexibilität, daß es ohne große Schwierigkeiten nach dem Biegen in das Außenrohr 4 eingezogen werden kann, und in diesem an beiden Enden befestigt werden kann. Aufgrund dieser Längselastizität müssen auch Längenänderungen im Betrieb nicht durch einen Schiebesitz ausgeglichen werden. Beim Biegen des Außenrohrs 4 muß lediglich besonders darauf geachtet werden, daß sich im Biegebereich der Rohrinnenquerschnitt nicht wesentlich verändert, da das längsgewellte Innenrohr in seinem Querschnitt nur eine relativ gerine Flexibilität besitzt und so das Einschieben in das Außenrohr erheblich erschwert würde.

## Patentansprüche

1. Verfahren zum Herstellen einer eine Biegung aufweisenden, doppelwandigen Abgasleitung (2) mit einem Außenrohr (4) und einem Innenrohr (6), das in Längsrichtung gewellt ist,
**dadurch gekennzeichnet,**
daß das Außenrohr (4) allein gebogen und das Innenrohr (6) in das gebogene Außenrohr (4) eingebracht wird.

2. Verfahren nach Anspruch 1,
**dadurch gekennzeichnet,**
daß das Innenrohr (6) an beiden Enden im Außenrohr (4) befestigt wird.

3. Verfahren nach Anspruch 1 oder 2,
**dadurch gekennzeichnet,**
daß ein Innenrohr (6) mit einer geringeren Wandstärke als das Außenrohr (4) in das Außenrohr (4) eingebracht wird.

4. Verfahren nach einem der Ansprüche 1 bis 3,
**dadurch gekennzeichnet,**
daß ein Innenrohr (6) aus einem wärmefesteren Material als das Außenrohr (4) in das Außenrohr (4) eingebracht wird.
